# EUROPÄISCHE PATENTSCHRIFT

(11) **EP 1 495 675 B1**
(45) Veröffentlichungstag und Bekanntmachung des Hinweises auf die Patenterteilung: **10.11.2010**
(21) Anmeldenummer: 04015310.8
(22) Anmeldetag: 30.06.2004
(51) Int. Cl.: A01K 27/00

(54) **Leineneinrichtung für eine auf- und abrollbare Leine zum Führen von Tieren**
Retractable pet leash
Laisse retractable pour animal domestique

(30) Priorität: 01.07.2003 DE 20310137 U
(43) Veröffentlichungstag der Anmeldung: 12.01.2005
(73) Patentinhaber: Flexi-Bogdahn Technik GmbH & Co. KG, 22941 Bargteheide (DE)
(72) Erfinder: Wünsche, Steffen, 22457 Hamburg (DE); Bogdahn, Manfred, 22397 Hamburg (DE)
(74) Vertreter: Jaeschke, Rainer

(56) Entgegenhaltungen:
- WO-A-90/15302
- DE-U1- 9 112 682
- DE-U1- 29 804 615
- US-A- 5 768 797
- US-B1- 6 405 451

## Beschreibung

Die Erfindung betrifft eine Leineneinrichtung für einen auf- und abrollbaren Gurt oder eine auf- und abrollbare Leine zum Führen von Tieren, mit einem Griff und einem damit verbundenen Gehäuse, in dem der Gurt auf einer in dem Gehäuse drehbar gelagerten Gurtrolle auf- und abwickelbar angeordnet ist, und mit einer Bremstaste, mit der die Gurtrolle und somit der Gurt in einer gewünschten Abschnittlänge gestoppt werden können, sowie mit einer Auslauföffnung, durch die der Gurt nach außen geführt ist.

Eine solche Leineneinrichtung ist beispielsweise aus der DE 298 04 615 U1 bekannt. Solche Leineneinrichtungen erlauben ein komfortables Führen der Tiere an einem Gurt bei größtmöglicher Kontrolle. Der Gurt wird von der Gurtrolle entgegen der Kraft einer Feder abgerollt und rollt sich bei Freigabe selbsttätig wieder auf. Damit kann die gewünschte Länge frei gewählt werden. Durch die Bremstaste wird das Auf- oder Abwickeln des Gurts angehalten. Derartige Leineneinrichtungen weisen seil-oder schnurförmige Leinen oder bandförmige Gurte auf. Die Erfindung bezieht sich insbesondere auf bandförmige Gurte, so dass im Folgenden überwiegende von Gurten die Rede ist, ohne dass damit eine Beschränkung verbunden sein soll.

Bei einem Gurt besteht die Gefahr, dass er sich beim Auf-oder Abwickeln von der Gurtrolle faltet und somit den Schlitz blockiert. Es ist aus der EP 0 536 859 A2 und DE 91 12 682 U1 bekannt, dass sich der Schlitz bogenförmig entlang eines Bogenabschnitts erstreckt. Aber auch hier kann ein Zusammenfalten des Gurts und ein Blockieren der Leineneinrichtung nicht immer vermieden werden.

Aus der US 5,768,797 und der US 6,405,451 B1 sind Maßbänder bekannt, die aufgrund der Rückstellkraft einer Feder in einem Gehäuse aufgerollt werden können. Der Auslaufschlitz weist einen vergrößerten mittleren Durchlassbereich auf, der zur Aufnahme des vorderen Anschlagselements der Maßbänder dient. Derartige Maßbänder bestehen aus Metall, und eine Faltenlegung beim Aufwickeln ist nicht zu befürchten.

Der Erfindung liegt die Aufgabe zugrunde, eine Leineneinrichtung der eingangs geschilderten Art so auszubilden, dass ein Gurt besser auf- und abgerollt werden kann.

Die Aufgabe wird gemäß der Erfindung dadurch gelöst, dass die Auslauföffnung des Gehäuses als Schlitz ausgeführt ist, der im Mittenbereich seiner Längserstreckung zumindest einseitig wenigstens einen vergrößerten Öffnungsabschnitt hat, dessen Breite mindestens der doppelten, vorzugsweise aber mindestens der dreifachen bis vierfachen Dicke des Gurtes beträgt. Es hat sich gezeigt, dass aufgrund der durch diesen vergrößerten Öffnungsabschnitt gebildeten mittigen Erweiterung des Schlitzes ein gefalteter Gurt wieder in seine ursprüngliche glatte Form gebracht werden kann. Der ungefaltete und glatte Gurt wird durch die seitlichen Bereiche des Schlitzes gut geführt. Ein einwandfreies Auf- und Abwickeln wird somit gewährleistet. Grundsätzlich ist ein einseitig sich erweiternder Öffnungsabschnitt des Schlitzes ausreichend. Es ist aber auch möglich, dass beidseitig ein vergrößerter Öffnungsabschnitt vorhanden ist. Auch ist eine exakt mittige Lage des erweiterten Öffnungsabschnitts nicht zwingend notwendig. Wegen der Symmetrie und der Tatsache, dass der Gurt einmal von der einen Seite und einmal von der anderen Seite eingezogen wird und die Faltung ebenfalls in unterschiedliche Richtungen erfolgen kann, ist eine im wesentlichen mittige Anordnung des vergrößerten Öffnungsabschnitts jedoch zweckmäßig.

Der vergrößerte Öffnungsabschnitt des Schlitzes ist vorzugsweise halbkreisförmig. Der Öffnungsabschnitt kann entweder zum Griff hin- oder von diesem wegweisen. In beiden Fällen wird ein sicheres Entfalten des Gurtes beim Auf- oder Abwickeln bewirkt.

Der Schlitz kann grundsätzlich beliebig ausgebildet sein. So ist es möglich, dass der Schlitz bogenförmig ist und zumindest näherungsweise entlang einem Kreisbogenabschnitt verläuft. Der Schlitz kann sich über etwa 180° oder von mehr als 180° bis 290° und insbesondere von 210° oder 240° bis 270° entlang dem Bogenabschnitt erstrecken. Es kann auch vorgesehen werden, dass der Schlitz bogenförmig entlang einer Hufeisenform verläuft. Dann bleibt das dadurch gebildete Innenteil über einen größeren Abschnitt mit dem Gehäuse verbunden als bei einem kreisrunden Schlitz mit gleichem Bogenwinkel. Das Innteil wird somit sicher gegen Herausbrechen gehalten. Bei allen Ausführungsformen ist es günstig, wenn der vergrößerte Öffnungsabschnitt auf der Innenseite des bogenförmigen Schlitzes liegt.

Auch kann vorgesehen werden, dass der Schlitz bogenförmig ist und einen mittleren in etwa geraden oder abgeflachten Bereich aufweist. Der vergrößerte Öffnungsabschnitt liegt dann vorzugsweise ebenfalls auf der Innseite des Bogens und im geraden Bereich des Schlitzes. Hier wird der ungefaltete Gurt durch den geraden mittleren Bereich gut geführt.

Bei derartigen bogenförmigen Schlitzen ist dieser teilweise deutlich länger als der Gurt breit ist. Dann kann es zweckmäßig sein, wenn entlang der in Bezug auf den Bogenabschnitt inneren und/oder äußeren Kante des Schlitzes mehrere und insbesondere zwei oder drei sich vergrößerte Öffnungsabschnitte vorhanden sind. Damit wird ein sicheres Entfalten bewirkt, da der Gurt in jeder Lage relativ zur Leineneinrichtung schnell in einen vergrößerten Öffnungsabschnitt laufen kann.

Die Kanten des vergrößerten Öffnungsabschnitts sind vorzugsweise abgerundet. Dadurch wird ein widerstandsarmes Auf- oder Abwickeln erreicht, wenn der Gurt gefaltet in diese Erweiterung gelangt. Auch wird ein Aufrauhen der Gurtkanten vermieden.

Vorzugsweise ist der Schlitz um bis zu einem Drittel oder bis zur Hälfte länger ist als die Breite des Gurts. Damit wird der Gurt mit Spiel in der Auslauföffnung gehalten, so dass er in gefalteter Lage leicht in die Erweiterung gelangen kann.

Insbesondere bei stärkeren Gurten ist ein Falten nicht immer so schnell zu befürchten. Hier hat sich gezeigt, dass ein bogenförmiger Schlitz, der sich über 210° bis 290° entlang eines Bogenabschnitts erstreckt, eine sichere Führung des Gurts ermöglicht.

Der Schlitz kann dabei entlang eines Kreisbogens oder aber in etwa entlang eines Hufeisens verlaufen.

Der Schlitz kann einstückig in das Kunststoffgehäuse eingeformt sein. Auch ist es möglich, dass der Schlitz durch einen Einsatz im Gehäuse gebildet wird. Dann kann das Gehäuse auch für andere Leinenformen eingesetzt werden, beispielsweise für schnurförmige Leinen, die eine in etwa kreisrunde Auslauföffnung benötigen.

Günstig ist es, wenn der Schlitz am Griffteil oder dem den Griff bildenden Abschnitt des Gehäuses angeordnet ist. Damit wirken die Zugkräfte durch das ziehende Tier in der Nähe der Hand der Person. Unerwünschte Kippmomente werden vermieden.

Die Erfindung wird im Folgenden anhand der schematischen Zeichnung näher erläutert. Es zeigen:
- Fig. 1: eine Leineneinrichtung im Schnitt dargestellt, mit Gurtführung und laufendem Gurt,
- Fig. 2: eine Gurtöffnung als gerader Schlitz,
- Fig. 3: eine Gurtöffnung mit bogenförmigem Schlitz,
- Fig. 3a: eine Gurtöffnung mit gefaltetem, blockiertem Gurt, ,
- Fig. 4: eine breite Gurtöffnung mit gefaltetem Gurt,
- Fig. 5: eine bogenförmige Gurtöffnung mit einem halbkreisförmigen erweiterten Öffnungs- abschnitt,
- Fig. 6: eine gerade Gurtöffnung mit einem halbkreisförmigen erweiterten Öffnungs- abschnitt,
- Fig. 7: eine Gurtöffnung mit einem halbkreisförmigen erweiterten Öffnungsabschnitt auf beiden Seiten,
- Fig. 8: eine Gurtöffnung mit einem Schlitz gemäß einer anderen Ausführungsform der Erfindung und
- Fig. 9: eine Gurtöffnung mit einem Schlitz, der mehrere erweiterte Öffnungsabschnitte aufweist.

Die in der Zeichnung dargestellt Leineneinrichtung für eine auf- und abrollbare Leine zum Führen von Tieren weist ein Gehäuse 1 mit einem Griff 2 auf, um die Leineneinrichtung zu tragen. In das Gehäuse ist eine Gurtrolle 3 mit einem darauf aufwickelbaren Gurt 4 eingebaut, der durch eine Öffnung 5 aus dem Gehäuse austritt. Es ist eine Bremstaste 6 zum Arretieren der Gurtrolle und somit zur Begrenzung des freien Gurtabschnittes in gewünschter Länge vorhanden. Am freien Ende ist der Gurt mit einem Verbindungshaken versehen. Insoweit entspricht die Leineneinrichtung einer herkömmlichen mechanisch auf- und abwickelbaren Leineneinrichtung und bedarf keiner weiteren Erläuterung.

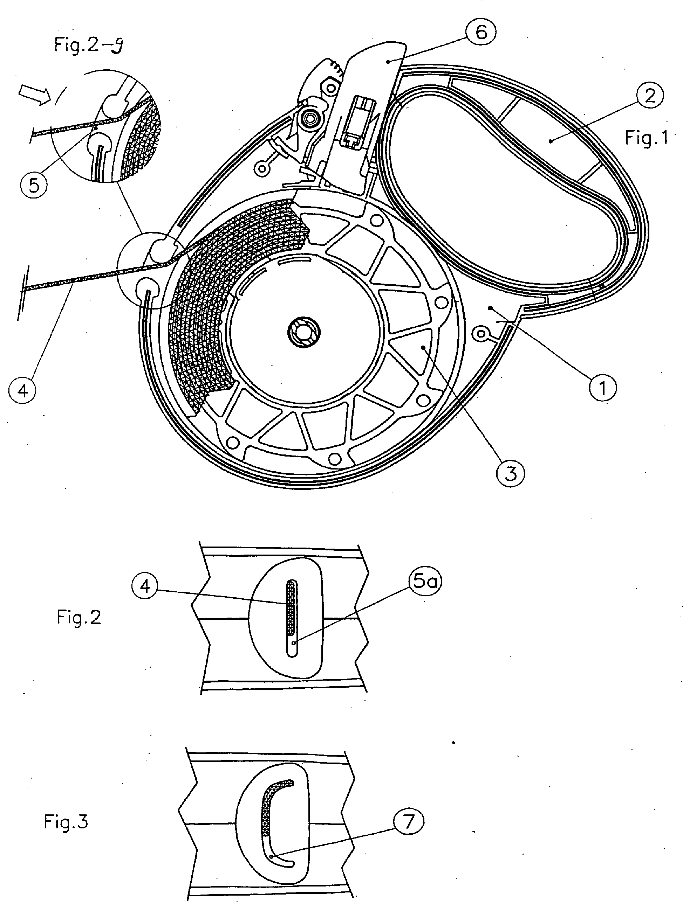

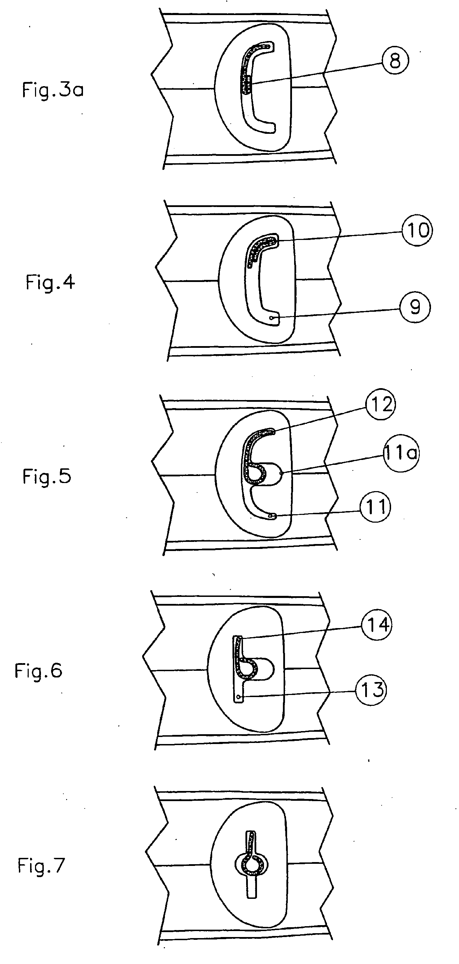

Bei diesen Leineneinrichtungen, die mit einem Gurt ausgestattet sind, wird der Gurt üblicherweise und wie in Fig. 2 gezeigt durch einen schmalen rechteckigen Schlitz 5a, der auch am Gehäuse angeformt sein kann, nach außen geführt. Um das Einschneiden des Gurtes an den Schlitzenden zu vermeiden, kann, wie in Fig. 3 gezeigt, der Schlitz 7 auch bogenförmig sein. Bei dem schmalen, gleichmäßig breiten Schlitz blockiert ein verdrehter oder gefalteter Gurt 8, wie in Fig. 3a dargestellt, den Schlitz, wenn er ein- oder ausläuft. Die automatische Leinenfunktion ist dann nicht mehr gegeben. Ein relativ breiter Schlitz 9 gemäß Fig. 4, in dem sich ein mehrfach gefalteter Gurt 10 nicht festklemmt, wirkt nicht stabilisierend auf den Gurt. Der gefaltete Gurt kann sich durchgehend doppelt legen. Dadurch wird die Wickelfülle auf der Rolle wesentlich erhöht, wodurch die Rolle übervoll werden und nicht mehr frei laufen kann.

Bei den weiterhin in den Fig. 5 bis 7 gezeigten Ausführungsformen kann ein verdrehter Gurt durchlaufen, wobei durch die Geometrie der Schlitze trotzdem auf den Gurt eingewirkt wird derart, dass er seine flache, gleichmäßige Grundform wieder annimmt. Bei dem Ausführungsbeispiel gemäß Fig. 5 wird der Gurt in einem bogenförmigen Schlitz 11 mit einem abgeflachten mittleren Bereich geführt. Der Schlitz ist nur ein wenig breiter als die Gurtdicke aber etwa um ein Drittel bis zur Hälfte länger als die Breite des Gurts. In der Mitte hat der Gurtschlitz einen in etwa halbkreisförmigen erweiterten Öffnungsabschnitt 11a, der dem gefalteten Gurt 12 erlaubt, ein- und auszulaufen, und der durch seine Profilierung den Gurt zu seiner ursprünglich flachen Form zurückformt. Dadurch wird der Gurt in der seitlichen Führung in seiner Grundform stabilisiert, im Mittelteil von dem Schlitz können jedoch Falten und Dopplungen ein-und auslaufen. Der Gurt wird jedoch in die flache Form zurückgefaltet.

Möglich ist dieser mittige erweiterte Öffnungsabschnitt auch bei einem geraden Schlitz 13 gemäß Fig. 6, der in der Herstellung sehr einfach ist. Schließlich ist ein solcher mittiger erweiterter Öffnungsabschnitt zu beiden Seiten des Schlitzes, wie in Fig. 7 gezeigt, möglich.

Der vergrößerte Öffnungsabschnitt ist an seinem Endabschnitt halbkreisförmig ausgebildet. Es kann, wie in Fig. 7 bei einem beidseitigen erweiterten Öffnungsabschnitt gezeigt, vorgesehen werden, dass sich der Halbkreis unmittelbar an den Schlitz anschließt. Es kann aber auch vorgesehen werden, dass, wie in den Fig. 5 und 6 gezeigt, sich an den halbkreisförmigen Endbereich zunächst ein gerader Bereich anschließt, dessen Breite dem Durchmesser des Halbkreises entspricht. Damit wird ein relativ tiefer Öffnungsabschnitt ausgebildet.

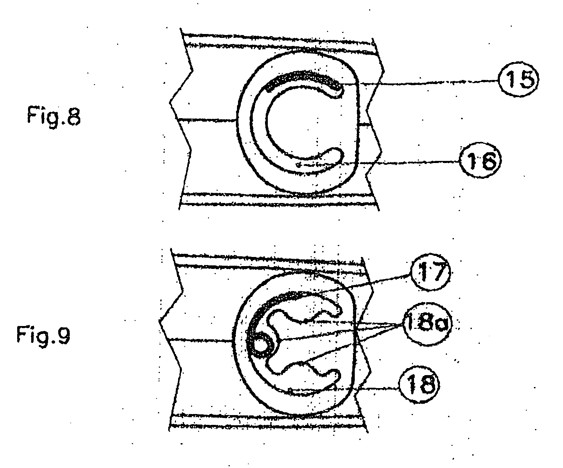

In Fig. 8 ist eine alternative Ausführungsform der Gurtöffnung zum sicheren Führen des Gurts 15 gezeigt. Der Schlitz erstreckt sich über einen Bogenabschnitt von etwa 270° entlang einer Hufeisenform. Durch die hochgezogenen seitlichen Bereiche schlägt der Gurt nicht an die Endbereich des Schlitzes an und kann reibungsfrei laufen. Eine Beschädigung der Gurtkanten und der Schlitzendbereiche wird vermieden. Fig. 9 zeigt einen gleichartigen Schlitz 18, der zudem mit drei sich erweiternden Öffnungsabschnitten 18a auf seinem inneren Kantenbereich versehen ist. Ein gefalteter Gurt 17 kann daher in jeder Lage relativ zum Gehäuse in einen erweiternden Öffnungsabschnitt einlaufen, um sich zu entfalten. Die vergrößerten Öffnungsabschnitte sind bei diesem Ausführungsbeispiel nicht so tief sondern als Mulde ausgebildet.

Die Breite des vergrößerten Öffnungsabschnitts entspricht mindestens der doppelten, vorzugsweise aber mindestens der dreifachen bis vierfachen Dicke des Gurtes. Die Tiefe des vergrößerten Öffnungsabschnitts entspricht mindestens der doppelten, vorzugsweise aber mindestens der dreifachen bis vierfachen Breite des Schlitzes. Der Abstand einer Kante der mittigen Öffnung zur zugeordneten seitlichen Begrenzung des Schlitzes beträgt etwa die Hälfte der Breite des Gurts und kann auch etwas kleiner oder etwas größer als die Hälfte der Breite des Gurts sein.

## Patentansprüche

1. Leineneinrichtung für einen auf- und abrollbaren Gurt (4) oder eine auf- und abrollbare Leine zum Führen von Tieren, mit einem Griff (2) und einem damit verbundenen Gehäuse (1), in dem der Gurt auf einer im Gehäuse drehbar gelagerten Gurtrolle (3) auf- und abwickelbar angeordnet ist, und mit einer Bremstaste (6), mit der die Gurtrolle und somit der Gurt in einer gewünschten Abschnittlänge gestoppt werden können, sowie mit einer Auslauföffnung (5), durch die der Gurt nach außen geführt ist, **dadurch gekennzeichnet, dass** die Auslauföffnung (5) des Gehäuses als Schlitz ausgeführt ist, der im Mittenbereich seiner Längserstreckung zumindest einseitig wenigstens einen vergrößerten Öffnungsabschnitt (11a) hat, dessen Breite mindestens der doppelten, vorzugsweise aber mindestens der dreifachen bis vierfachen Dicke des Gurtes beträgt.

2. Leineneinrichtung nach Anspruch 1, **dadurch gekennzeichnet, dass** ein vergrößerter Öffnungsabschnitt auf beiden Seiten des Schlitzes vorhanden ist.

3. Leineneinrichtung nach Anspruch 1 oder 2, **dadurch gekennzeichnet, dass** der vergrößerte Öffnungsabschnitt zumindest an seinem dem Schlitz abgekehrten Endbereich halbkreisförmig ist.

4. Leineneinrichtung nach einem der Ansprüche 1 bis 3, **dadurch gekennzeichnet, dass** der vergrößerte Öffnungsabschnitt zum Griff hin- oder von diesem wegweist.

5. Leineneinrichtung nach einem der Ansprüche 1 bis 4, **dadurch gekennzeichnet, dass** der Schlitz bogenförmig ausgeführt ist.

6. Leineneinrichtung nach Anspruch 5, **dadurch gekennzeichnet, dass** sich der Schlitz (16) über einen Bogenabschnitt von 180° bis 290° und insbesondere von 210° oder 240° bis 270° erstreckt.

7. Leineneinrichtung nach Anspruch 5 oder 6, **dadurch gekennzeichnet, dass** der Schlitz zumindest näherungsweise entlang einem Kreisbogen verläuft oder entlang einer Hufeisenform verläuft.

8. Leineneinrichtung nach einem der Ansprüche 1 bis 7, **dadurch gekennzeichnet, dass** der Schlitz bogenförmig ist und einen mittleren in etwa geraden Abschnitt aufweist.

9. Leineneinrichtung nach Anspruch 5 bis 8, **dadurch gekennzeichnet, dass** der vergrößerte Öffnungsabschnitt auf der Innenseite des bogenförmigen Schlitzes liegt.

10. Leineneinrichtung nach Anspruch 5 bis 9, **dadurch gekennzeichnet, dass** entlang der in Bezug auf den Bogenabschnitt inneren und/oder äußeren Kante des Schlitzes mehrere und insbesondere zwei oder drei sich vergrößerte Öffnungsabschnitte vorhanden sind.

11. Leineneinrichtung nach einem der Ansprüche 1 bis 10, **dadurch gekennzeichnet, dass** die Kanten des vergrößerten Öffnungsabschnitts abgerundet sind.

12. Leineneinrichtung nach einem der Ansprüche 1 bis 11, **dadurch gekennzeichnet, dass** der Schlitz um bis zu einem Drittel oder bis zur Hälfte länger ist als die Breite des Gurts.

13. Leineneinrichtung für einen auf- und abrollbaren Gurt (4) oder eine auf- und abrollbare Leine zum Führen von Tieren, mit einem Griff (2) und einem damit verbundenen Gehäuse (1), in dem der Gurt auf einer im Gehäuse drehbar gelagerten Gurtrolle (3) auf- und abwickelbar angeordnet ist, und mit einer Bremstaste (6), mit der die Gurtrolle und somit der Gurt in einer gewünschten Abschnittlänge gestoppt werden können, sowie mit einer Auslauföffnung (5), durch die der Gurt nach außen geführt ist, **dadurch gekennzeichnet, dass** die Auslauföffnung (5) des Gehäuses als bogenförmiger Schlitz ausgeführt ist, der entlang eines Bogenabschnitts von 210° bis 290° verläuft.

14. Leineneinrichtung nach Anspruch 13, **dadurch gekennzeichnet, dass** der Schlitz zumindest näherungsweise entlang eines Kreisbogenabschnitts oder entlang einer Hufeisenform verläuft.

15. Leineneinrichtung nach Anspruch 1 bis 14, **dadurch gekennzeichnet, dass** der Schlitz einstückig in das Kunststoffgehäuse eingeformt ist.

16. Leineneinrichtung nach Anspruch 1 bis 15, **dadurch gekennzeichnet, dass** der Schlitz durch einen Einsatz im Gehäuse gebildet wird.

17. Leineneinrichtung nach einem der Ansprüche 1 bis 16, **dadurch gekennzeichnet, dass** der Schlitz am Griffteil oder dem den Griff bildenden Abschnitt des Gehäuses angeordnet ist.

## Claims

1. A leash device for a belt (4) capable of being rolled up and unrolled or a leash capable of being rolled up and unrolled for leading animals, with a handle (2) and a casing (1) which is connected thereto and in which the belt is arranged so as to be capable of being wound up and unwound on a belt roller (3) mounted so as to be rotatable in the casing, and with a brake button (6) by which the belt roller and thus the belt can be stopped at a desired portion length, and with a run-out opening (5) through which the belt is passed outwards, **characterized in that** the run-out opening (5) of the casing is designed in the form of a slot which in the middle region of the longitudinal extension thereof has at least on one side at least one enlarged opening portion (11a), the width of which amounts to at least twice, but preferably at least three to four times, the thickness of the belt.

2. A leash device according to claim 1, **characterized in that** an enlarged opening portion is present on both sides of the slot.

3. A leash device according to claim 1 or 2, **characterized in that** the enlarged opening portion is semicircular at least at the end area thereof facing away from the slot.

4. A leash device according to any one of claims 1 to 3, **characterized in that** the enlarged opening portion is directed towards the handle or away from it.

5. A leash device according to any one of claims 1 to 4, **characterized in that** the slot is made curved.

6. A leash device according to claim 5, **characterized in that** the slot (16) extends over a curve portion of from 180° to 290° and in particular from 210° or 240° to 270°.

7. A leash device according to claim 5 or 6, **characterized in that** the slot extends at least substantially along a circular curve or along a horseshoe shape.

8. A leash device according to any one of claims 1 to 7, **characterized in that** the slot is curved and has a middle, substantially straight portion.

9. A leash device according to claims 5 to 8, **characterized in that** the enlarged opening portion is situated on the inside of the curved slot.

10. A leash device according to claims 5 to 9, **characterized in that** a plurality of, and in particular two or three, enlarged opening portions are present along the inner and/or outer edge of the slot with respect to the curve portion.

11. A leash device according to any one of claims 1 to 10, **characterized in that** the edges of the enlarged opening portion are rounded off.

12. A leash device according to any one of claims 1 to 11, **characterized in that** the slot is longer by up to a third or up to a half than the width of the belt.

13. A leash device for a belt (4) capable of being rolled up and unrolled or a leash capable of being rolled up and unrolled for leading animals, with a handle (2) and a casing (1) which is connected thereto and in which the belt is arranged so as to be capable of being wound up and unwound on a belt roller (3) mounted so as to be rotatable in the casing, and with a brake button (6) by which the belt roller and thus the belt can be stopped at a desired portion length, and with a run-out opening (5) through which the belt is passed outwards, **characterized in that** the run-out opening (5) of the casing is designed in the form of a curved slot which extends along a curve portion of from 210° to 290°.

14. A leash device according to claim 13, **characterized in that** the slot extends at least substantially along a circular-curve portion or along a horseshoe shape.

15. A leash device according to claims 1 to 14, **characterized in that** the slot is formed integrally in the plastics-material casing.

16. A leash device according to claims 1 to 15, **characterized in that** the slot is formed by an insert in the casing.

17. A leash device according to any one of claims 1 to 16, **characterized in that** the slot is arranged on the handle part or on the portion of the casing forming the handle.

## Revendications

1. Dispositif de laisse pour une sangle rétractable (4) ou une laisse rétractable pour guider des animaux, comprenant :
- une poignée (2) et un boîtier (1) relié à celle-ci dans lequel la laisse s'enroule et se déroule sur une bobine (3) montée à rotation dans le boîtier, et
- un bouton de frein (6) par lequel la bobine de laisse et ainsi la laisse peuvent être arrêtées pour un segment de longueur souhaitée,
- ainsi qu'un orifice de sortie (5) traversé par la laisse,
dispositif **caractérisé en ce que**
l'orifice de sortie (5) du boîtier est réalisé sous la forme d'une fente ayant dans la zone médiane de son extension longitudinale, d'un côté au moins un segment d'ouverture (11a), agrandi, dont la largeur est égale à au moins deux fois, de préférence au moins trois fois jusqu'à quatre fois, l'épaisseur de la laisse.

2. Dispositif de laisse selon la revendication 1,
**caractérisé par**
un segment d'ouverture agrandi des deux côtés de la fente.

3. Dispositif de laisse selon la revendication 1 ou 2,
**caractérisé en ce que**
le segment d'ouverture agrandi présente une forme de demi-cercle dans au moins une zone d'extrémité à l'opposé de la fente.

4. Dispositif de laisse selon l'une des revendications 1 à 3,
**caractérisé en ce que**
le segment d'ouverture agrandi est dirigé vers la poignée ou dans une direction s'écartant de celle-ci.

5. Dispositif de laisse selon l'une des revendications 1 à 4,
**caractérisé en ce que**
la fente a une forme arquée.

6. Dispositif de laisse selon la revendication 5,
**caractérisé en ce que**
la fente (16) s'étend sur un segment d'arc compris entre 180° et 290° et notamment compris entre 210° et 240° jusqu'à 270°.

7. Dispositif de laisse selon la revendication 5 ou 6,
**caractérisé en ce que**
la fente s'étend au moins approximativement sur un arc de cercle ou suivant une forme de fer à cheval.

8. Dispositif de laisse selon l'une des revendications 1 à 7,
**caractérisé en ce que**
la fente est en forme d'arc et comporte dans sa zone médiane, un segment sensiblement droit.

9. Dispositif de laisse selon l'une des revendications 5 à 8,
**caractérisé en ce que**
le segment d'ouverture agrandi se situe sur le côté intérieur de la fente de forme arquée.

10. Dispositif de laisse selon l'une des revendications 5 à 9,
**caractérisé en ce que**
plusieurs et en particulier deux ou trois segments d'ouverture agrandis sont prévus le long de l'arête intérieure et/ou extérieure de la fente par rapport au segment d'arc.

11. Dispositif de laisse selon l'une des revendications 1 à 10,
**caractérisé en ce que**
les arêtes du segment d'ouverture agrandi sont arrondies.

12. Dispositif de laisse selon l'une des revendications 1 à 11,
**caractérisé en ce que**
la fente est plus longue d'un tiers jusqu'à la moitié de la largeur de la ceinture.

13. Dispositif de laisse pour une laisse rétractable pour guider des animaux, comprenant une poignée (2) reliée à un boîtier (1) dans lequel la laisse peut être enroulée et déroulée sur une bobine (3) montée à rotation dans le boîtier, ainsi qu'un bouton de frein (6) pour bloquer la bobine de laisse et ainsi la laisse, pour un segment de longueur choisie, ainsi qu'un orifice de sortie (5) par lequel passe la laisse,
**caractérisé en ce que**
l'orifice de sortie (5) du boîtier est réalisé sous la forme d'une fente courbe s'étendant sur un segment d'arc compris entre 210° et 290°.

14. Dispositif de laisse selon la revendication 13,
**caractérisé en ce que**
la fente s'étend au moins approximativement le long d'un segment d'arc de cercle ou le long d'une forme de fer à cheval.

15. Dispositif de laisse selon l'une des revendications 1 à 14,
**caractérisé en ce que**
la fente fait corps avec le boîtier de matière plastique.

16. Dispositif de laisse selon l'une des revendications 1 à 15,
**caractérisé en ce que**
la fente est formée par un insert dans le boîtier.

17. Dispositif de laisse selon l'une des revendications 1 à 16,
**caractérisé en ce que**
la fente est prévue sur la poignée ou sur le segment du boîtier qui forme la poignée.
